# EUROPEAN PATENT APPLICATION

(11) **EP 3 505 314 A1**
(43) Date of publication of application: **03.07.2019**
(21) Application number: 17843659.8
(22) Date of filing: 23.08.2017
(51) Int. Cl.: B25J 19/06, G05B 23/02

(54) **REMOTE MONITORING SYSTEM FOR ROBOT**

(30) Priority: 24.08.2016 JP 2016163965
(71) Applicant: Kawasaki Jukogyo Kabushiki Kaisha, Kobe-shi, Hyogo 650-8670 (JP)
(72) Inventor: NAKAMURA, Masakazu, Akashi-shi Hyogo 673-8666 (JP); KAWAI, Makoto, Akashi-shi Hyogo 673-8666 (JP); SHIMIZU, Tomoya, Akashi-shi Hyogo 673-8666 (JP); KAGAWA, Akira, Akashi-shi Hyogo 673-8666 (JP)
(74) Representative: Müller-Boré & Partner Patentanwälte PartG mbB
(86) International application number: PCT/JP2017/030207
(87) International publication number: WO 2018/038181

(57) **Abstract**

This system is a remote monitoring system for monitoring the state of a robot (2) at a place away from a user site (1). The system is provided with: an analysis result data acquiring unit for analyzing an electric current data of a motor of a drive system of the robot (2) and acquiring an analysis result data at the user site (1); a data server (5) provided at a remote place away from the user site (1) for recording the analysis result data obtained by the analysis result data acquiring unit (4); a communication unit (6) for transmitting the analysis result data to the data server (5); and a mobile terminal (7) for reading and displaying the analysis result data recorded in the data server (5). In the remote monitoring system, the amount of data (communication amount) transmitted from a user site to a remote place can be reduced.

## Description

### Technical Field

The present invention relates to a remote monitoring system for monitoring the state of a robot at a location remote from the user site.

### Background Art

A robot such as industrial robot causes, due to its long-term use, deterioration of equipment configuring the robot drive system for driving the robot arm and the robot external shaft (for example, friction of the gear of the reduction gear), thereby the operation accuracy of the robot is reduced. Further, if such a state is left unattended, the equipment configuring the robot drive system is damaged and the robot breaks down.

In the industrial robot installed in the production line, when the robot breaks down, the entire production line is stopped, productivity is lowered, and the production plan is obstructed. Therefore, there is a market demand that preventive maintenance is carried out before a failure occurs in the robot to prevent a failure in advance.

In order to meet the market demand, for example, a method can be considered in which the residual life of the equipment is estimated based on the design life of the equipment (reduction gear or the like) configuring the drive system of the robot and the operation time of the robot up to the present day.

However, there are some cases where the robot operation condition which is assumed when determining the design life of the equipment is significantly different from the robot operation condition in actual operation. Therefore, in the method of estimating the residual life of the equipment based on the design life of the equipment and the robot operation time up to the present day, it is difficult to maintain the accuracy of the estimated value at a high level.

Meanwhile, there is proposed a technique of transmitting data of a robot control device in actual work from a user site to a remote place via a communication line, and carrying out failure diagnosis and maintenance based on the transmitted data (Patent Documents 1 and 2).

### Citation List

### Patent Documents

[Patent Document 1] JP 2002-287816 A
[Patent Document 2] JP 2007-190663 A

### Summary of Invention

### Objects to be Achieved by the Invention

However, since the conventional technology disclosed in Patent Documents 1 and 2 is to transmit raw data acquired from a robot control device directly to a remote place via a communication line, the amount of data to be transmitted (communication amount) becomes huge, and it has problems such as a decrease in communication speed.

The present invention is made considering the above-described problems of the conventional technology, and its object is to provide a remote monitoring system for robot capable of reducing the amount of data (communication amount) transmitted from a user site to a remote place.

### Means for Achieving the Objects

In order to achieve the above-mentioned objects, a first aspect of the present invention is a remote monitoring system for robot for monitoring a state of a robot at a place away from a user site, comprising: an analysis result data acquiring unit for analyzing an electric current data of a motor of a drive system of the robot and acquiring an analysis result data at the user site; a data server provided at a remote place away from the user site for recording the analysis result data obtained by the analysis result data acquiring unit; a communication unit for transmitting the analysis result data to the data server; and a mobile terminal for reading and displaying the analysis result data recorded in the data server.

A second aspect of the present invention is that, in the first aspect, the analysis result data includes at least one of an average electric current value (I²) of the motor, a peak electric current value, and a motor allowable load rate.

A third aspect of the present invention is that, in the second aspect, the analysis result data includes an information about a change with time of at least one of the average electric current value (I²), the peak electric current value, and the motor allowable load rate.

A fourth aspect of the present invention is that, in any one of the first to third aspects, the communication unit is configured to transmit an environment setting data to the data server in addition to the analysis result data.

A fifth aspect of the present invention is that, in any one of the first to fourth aspects, the communication unit includes a mail server.

### Advantageous Effect of the Invention

According to the present invention, there can be provided a remote monitoring system for robot capable of reducing the amount of data (communication amount) which is transmitted from a user site to a remote place.

### Brief Description of the Drawings

FIG. 1 is a diagram illustrating a schematic configuration of a remote monitoring system for a robot according to an embodiment of the present invention.
FIG. 2 is a diagram illustrating environment setting data which is one of the transmission information in the remote monitoring system illustrated in FIG. 1.
FIG. 3 is a diagram illustrating a schematic configuration of a variation of the remote monitoring system illustrated in FIG. 1.
FIG. 4 is a diagram illustrating a schematic configuration of another variation of the remote monitoring system illustrated in FIG. 1.
FIG. 5 is a diagram illustrating a schematic configuration of another variation of the remote monitoring system illustrated in FIG. 1.

### Embodiments of the Invention

Hereunder, a remote monitoring system for robot according to an embodiment of the present invention will be described referring to the drawings.

The remote monitoring system for robot according to the present embodiment is a system for monitoring the state (operation state, deterioration state, and the like) of the robot at a location away from the user site. The robot comprises a robot arm and a robot drive system for driving the robot arm and the external shaft of the robot.

Note that, in this specification, the "user site" includes not only the factory where the robot actually operates but also the monitoring center of the robot user side used for monitoring the robot.

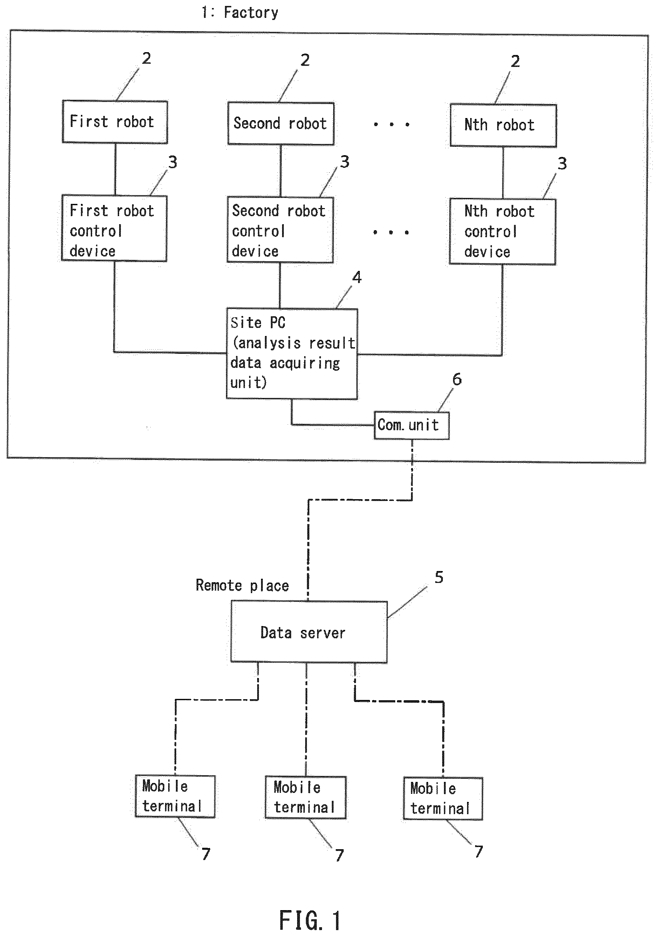

As illustrated in FIG. 1, a plurality of robots 2 are installed in a factory (user site) 1. A first robot 2 is controlled by a first robot control device 3, a second robot 2 is controlled by a second robot control device 3, and a N robot 2 is controlled by a N robot control device 3.

In the factory 1 (user site), a site PC 4 which receives data of a robot drive system from a plurality of robot control devices 3 is provided. The robot drive system has a servo motor for generating a driving force, a reduction gear for transmitting the driving force from the servo motor to the robot arm and the robot external shaft, and an encoder for detecting the position of the servo motor.

The site PC 4 installed in the factory (user site) 1 configures an analysis result data acquisition unit for analyzing the electric current data of the servo motor of the robot drive system and acquiring analysis result data. Specifically, in the remote monitoring system for robot according to this embodiment, the analysis of the electric current data of the servo motor of the robot drive system is performed at the factory (user site) 1 where the robot 2 is installed.

By analyzing the electric current data of the servo motor executed by the site PC 4, analysis result data on such as the average electric current value (I²) used for fault prediction of the reduction gear, the peak electric current value used for diagnosing the peak torque, and the motor allowable load rate used for duty diagnosis of motor is obtained.

Here, the average electric current value (I²), the peak electric current value, and the motor permissible load rate are data acquired based on the measured value of the electric current generated when the robot is operated under the same operation condition. For example, the average electric current value (I²) is the average value of the electric current values generated under the same operation condition, and the peak electric current value is the peak value of the electric current value generated under the same operation condition.

Further, the above-described analysis result data includes information on the respective aging changes of the average electric current value (I²), the peak electric current value, and the motor permissible load rate, and the life of the robot drive system including equipment such as a reduction gear can be predicted based on the change with time information.

For example, when estimating the residual life of the robot drive system based on the average electric current value (I2), with reference to the initial measured value, the time (residual life) until the average electric current value (I²) reaches the threshold value is estimated with the threshold value set at 107% (design reference). Further, regarding the peak electric current value, the residual life is estimated with reference to the electric current limit value (amplifier, reduction gear, motor electric current limit). Further, regarding the motor permissible load rate (duty), the residual life is estimated with reference to the motor continuous stall electric current value (motor manufacturer specification).

Note that, in this example, the site PC 4 which is the analysis result data acquiring unit is provided in the factory 1 where the robot 2 is actually installed, while the analysis result data acquiring unit may be provided at a monitoring center (facility of a robot user) for monitoring the robot 2 as a variation.

The remote monitoring system for robot according to this embodiment comprises a data server 5 for recording the analysis result data obtained by the analysis result data acquiring unit configured by the site PC 4 at a remote place away from the factory (user site) 1.

Further, the remote monitoring system comprises a communication unit 6 for transmitting the analysis result data from the site PC 4 to the data server 5 installed at the remote place. The communication unit 6 in this example configures a virtual private network (VPN), and can transmit the analysis result data to the data server 5 utilizing a commercial communication line such as the Internet or a telephone line or a dedicated line such as the LAN, for example.

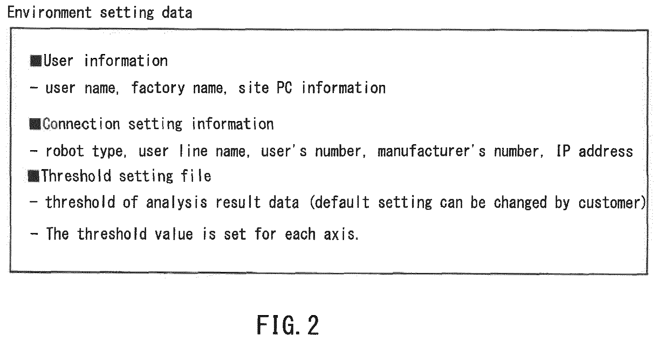

The information transmitted to the data server 5 by the communication unit 6 includes the environment setting data illustrated in FIG. 2 in addition to the above-described analysis result data. The environment setting data includes at least user information (user name, factory name, site PC information), connection setting information (robot type, user line name, user's number, manufacturer's number, IP address) and a threshold setting file (threshold of analysis result data).

Although the threshold value of the analysis result data is set to the default value, it can be changed by the user. Further, the threshold value of the analysis result data is set for each of a plurality of axes configuring the robot. The remote monitoring system according to this embodiment further comprises a portable terminal 7 for reading and displaying the analysis result data and the environment setting data recorded in the data server 5.
The portable terminal 7 can be configured by a mobile phone, a smart phone, a notebook computer, or the like.

In the remote monitoring system for robot according to this embodiment, analysis of the electric current data of the servo motor is performed by the site PC (analysis result data acquiring unit) 4 at the factory (user site) 1 and the analysis result data acquired by the site PC 4 is transmitted to the data server 5 at a remote place by using the communication unit 6.

Namely, instead of directly transmitting the raw data acquired from the robot control device 3 to the data server 5 via the communication unit 6, before transmitting to the data server 5, analysis of the raw data is performed on the factory (user site) 1 side.

As described above, in the remote monitoring system for robot according to this embodiment, analysis of the electric current data of the servo motor is performed by the site PC (analysis result data acquiring unit) 4 at the factory (user site) 1 and the analysis result data acquired by the site PC 4 is transmitted to the data server 5 at a remote place via the communication unit 6.

Since the data amount of the analysis result data is considerably smaller than the raw data acquired from the robot control device 3, the amount (communication amount) of data to be transmitted to the data server 5 via the communication unit 6 is greatly reduced. Thereby, communication speed and the like can be improved.

Further, by confirming the analysis result data stored in the data server 5 with the mobile terminal 7, the state of the robot (residual life of the drive system, or the like) can be timely grasped at a remote place away from the factory (user site) 1.

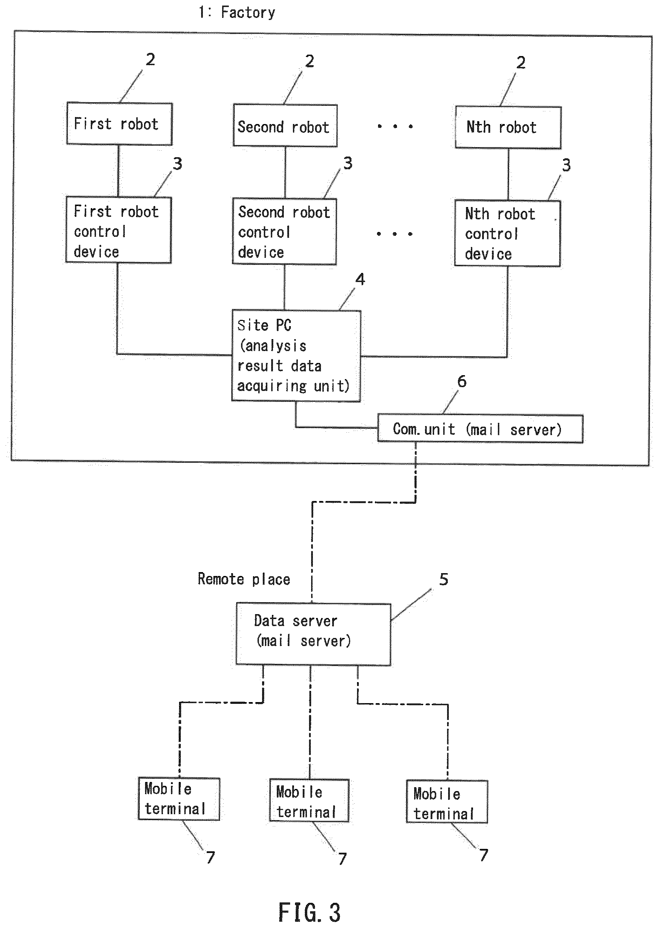

Note that, in this example, the VPN is utilized as the communication unit 6 for transmitting data from the factory (user site) 1 to the data server 5, while as a variation, the mail server may be utilized as the communication unit 6 as illustrated in FIG. 3. In this case, the data server 5 also functions as a mail server. Alternatively, a separate mail server may be provided on the upstream side (factory side) of the data server 5.

As described above, since the communication unit 6 transmits the analysis result data which is the result obtained by previous analysis with the site PC (analysis result data acquiring unit) 4, the amount of communication of data to be transmitted by the communication unit 6 can be extremely small, and as a result, transmission by e-mail becomes possible. By using the communication unit 6 as a mail server, there is an advantage that security against intrusion from the outside to the user site can be strengthened.

Note that, the communication unit (mail server) 6 is installed inside the factory 1 in FIG. 3, while the installation place of the communication unit (mail server) 6 may be any place in the user site, even if it is not in the factory 1.

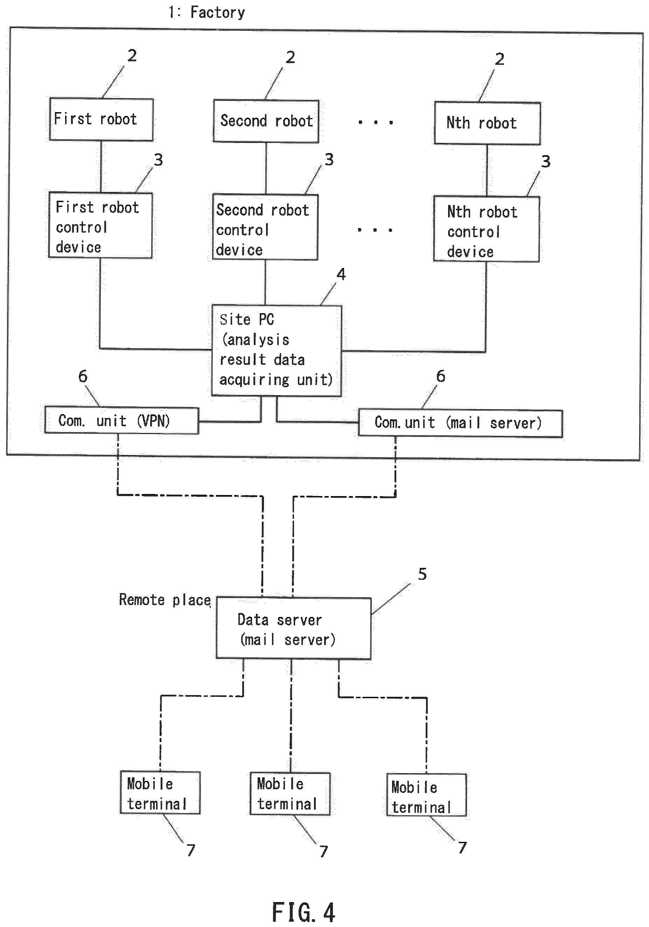

As another variation, as illustrated in FIG. 4, both the communication unit 6 utilizing the VPN and the communication unit 6 utilizing the mail server may be installed. In this example, for example, normally the communication unit 6 of the mail server is used to transmit the analysis result data to the data server, and in the case where bidirectional data communication is required, it is switched so that the communication unit 6 of the VPN is used.

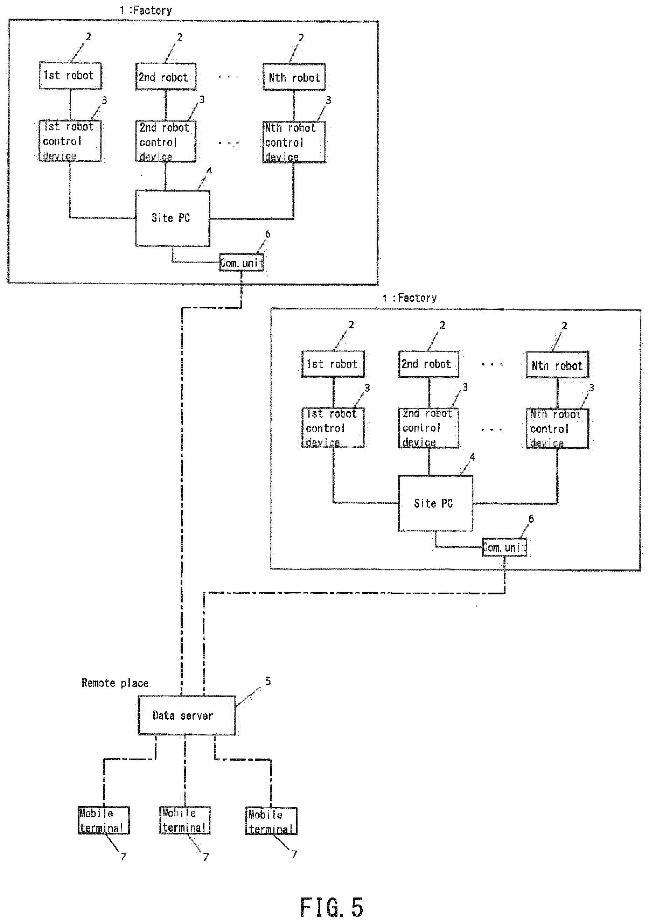

As still another variation, as illustrated in FIG. 5, communication may be performed from the respective communication unit 6 of the plurality of factories 1 to the data server 5. The communication unit 6 in this example may be the VPN, or the mail server, or both communication unit 6 may be provided. Note that, when utilizing the mail server as the communication unit 6 in this example, the security level is improved as described above, so that even when the respective users (owners) of a plurality of factories 1 differ, for example, it is possible to reliably ensure a sufficient security level.

### Description of Reference Numerals

- 1 ...: factory (user site)
- 2 ...: robot
- 3 ...: robot control device
- 4 ...: site PC
- 5 ...: data server
- 6 ...: communication unit
- 7 ...: mobile terminal

## Claims

1. A remote monitoring system for monitoring a state of a robot at a place away from a user site, comprising:
an analysis result data acquiring unit for analyzing an electric current data of a motor of a drive system of the robot so as to acquire an analysis result data at the user site;
a data server provided at a remote place away from the user site for recording the analysis result data obtained by the analysis result data acquiring unit;
a communication unit for transmitting the analysis result data to the data server; and
a mobile terminal for reading and displaying the analysis result data recorded in the data server.

2. The remote monitoring system for the robot according to claim 1, wherein the analysis result data includes at least one of an average electric current value (I²) of the motor, a peak electric current value, and a motor allowable load rate.

3. The remote monitoring system for the robot according to claim 2, wherein the analysis result data includes an information about a change with time of at least one of the average electric current value (I²), the peak electric current value, and the motor allowable load rate.

4. The remote monitoring system for the robot according to any one of claims 1 to 3, wherein the communication unit is configured to transmit an environment setting data to the data server in addition to the analysis result data.

5. The remote monitoring system for the robot according to any one of claims 1 to 4, wherein the communication unit includes a mail server.
